# EUROPEAN PATENT APPLICATION

(11) **EP 1 426 704 A2**
(43) Date of publication of application: **09.06.2004**
(21) Application number: 03016814.0
(22) Date of filing: 23.07.2003
(51) Int. Cl.: F24F 11/00

(54) **Air conditioner control system using telephone network and method for operating the same**

(30) Priority: 02.12.2002 KR 2002075976
(71) Applicant: LG Electronics, Inc., Seoul 150-010 (KR)
(72) Inventor: Yoon, Sang Chul, Ilsan-ku, Koyang-si 411-370, Kyungki-do (KR); Jeon, Duck Gu, Seongdong-ku, 133-070 Seoul (KR); Jung, Jae Sik, 142-108 Seoul (KR); Kwon, Jae Hwan, Yeoungdungpo-ku, 150-754 Seoul (KR)
(74) Representative: TER MEER STEINMEISTER & PARTNER GbR

(57) **Abstract**

An air conditioner control system using a telephone network and a method for operating the same, wherein a remote electronic device (200) is connected to a plurality of air conditioners (100) in a home or building through the telephone network at a remote site to input a control command to each of the air conditioners (100), and a control program is run in the remote electronic device (200) to register information about settings of the air conditioners. The air conditioners (100) are adapted to transmit and receive signals over the telephone network. The remote electronic device (200) is adapted to drive the control program to receive the setting information of the plurality of air conditioners (100), register the received setting information and input control commands to some or all of the air conditioners on the basis of the registered setting information. If a specific control command is inputted by a remote user, then it is automatically transmitted to a corresponding one of the air conditioners (100) with reference to the registered setting information of the corresponding air conditioner. Therefore, there is no need to perform a manual setting/manual transmission operation, resulting in an improvement in the convenience of remote control.

## Description

### BACKGROUND OF THE INVENTION

### Field of the Invention

The present invention relates to an air conditioner control system using a telephone network and a method for operating the same, and more particularly to an air conditioner control system using a telephone network and a method for operating the same, wherein a remote electronic device is connected to a plurality of air conditioners through the telephone network at a remote site to input a control command to each of the air conditioners, and a control program is run in the remote electronic device to register information about settings of the air conditioners such that the control command is simply and conveniently inputted and transferred.

### Description of the Related Art

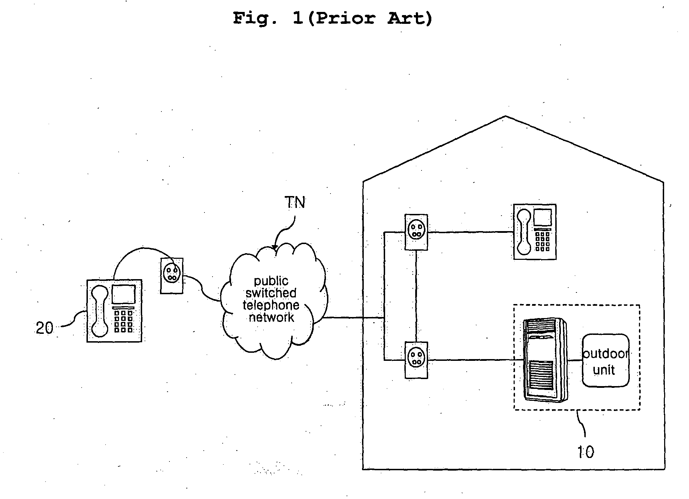

A conventional air conditioner control system using a telephone network will hereinafter be described with reference to Fig. 1.

In general, air conditioners include outdoor units and indoor units. In such an air conditioner, a refrigerant establishes a thermal cycle of compression, condensation, expansion and evaporation while circulating through outdoor and indoor units, so that it carries out a cooling or heating operation to condition indoor air.

Home network systems have recently been developed. Such a home network system includes a plurality of home appliances connected to an internal network constructed in a home or building, and a server, more particularly a home server, connected to the internal network for controlling the home appliances in an integrated manner. Employed as the home server is a home appliance which has a storage function and sufficient data processing capacity to function as the server. Alternatively, a home server-dedicated device may be utilized to centrally control the home appliances connected to the internal network.

Such a home network system further has a gateway function for connecting the home server to an external Internet network. This gateway function enables a remote user to access the home server in the home or building over the Internet to monitor the states of the plurality of home appliances controlled by the home server and input a control command to each of the home appliances.

In this home network system, however, a local area network (LAN) line must be constructed in the home or building to enable the smooth transmission and reception of signals among the home appliances connected to the internal network. It is also necessary to construct a very high speed Internet network on a region or country basis in order to facilitate the remote control of the home network system. In this connection, the above-mentioned home network system has a limitation in that it cannot be applied directly to a region, country, large-size building, apartment or etc. where access to the Internet is limited.

One approach to the above problem is an air conditioner control system using an existing public switched telephone network which has been developed to allow a remote user to remotely input control commands to a plurality of air conditioners installed in a home or building and monitor the states of the air conditioners. This air conditioner control system using the public switched telephone network is shown in Fig. 1.

In the air conditioner control system using the public switched telephone network, as shown in Fig. 1, an air conditioner 10 is connected to a telephone terminal in the home or building so that it can be connected with a calling party (remote user) through the public switched telephone network TN to transmit and receive signals to/from the calling party over the telephone network. If the remote user makes a call to the building or home where the air conditioner 10 is installed, then a call connection is established, and the remote user can thus input a control command for the air conditioner 10 by manipulating buttons on a telephone 20. The inputted control command is transferred to the air conditioner 10 over the public switched telephone network TN to control it.

However, the above-mentioned conventional air conditioner control system using the public switched telephone network TN has a disadvantage in that only a simple operation of the air conditioner 10, such as an ON/OFF operation, can be controlled due to a limited number of buttons configured on the telephone 20. This limits the functionality of remotely controllable air conditioners, resulting in an inconvenience to the user and a degradation in utilization degree.

### SUMMARY OF THE INVENTION

Therefore, the present invention has been made in view of the above problems, and it is an object of the present invention to provide an air conditioner control system using a telephone network and a method for operating the same, wherein a remote electronic device, which is connectable to the telephone network, is operated to input control commands to some or all air conditioners in a home or building to be controlled, and a control program, which is capable of monitoring controlled states of the air conditioners, is run in the remote electronic device to register information about settings of the air conditioners, so that, at the same time that a specific control command is inputted by a remote user, the remote electronic device can be automatically connected to one of the air conditioners corresponding to the specific control command to transmit and receive signals to/from the corresponding air conditioner.

In accordance with one aspect of the present invention, the above and other objects can be accomplished by the provision of an air conditioner control system using a telephone network, comprising a plurality of air conditioners for transmitting and receiving signals over the telephone network; and remote electronic means for driving a control program to receive information about settings of the plurality of air conditioners, register the received setting information and input control commands to some or all of the air conditioners on the basis of the registered setting information.

In accordance with another aspect of the present invention, there is provided a method for operating an air conditioner control system using a telephone network, comprising the steps of a) running an air conditioner control program in a remote electronic device to register information about settings of a plurality of air conditioners; b) selecting one of the air conditioners to be controlled and inputting a control command for the selected air conditioner; and c) creating a control command data packet on the basis of the setting information registered at the step a) and automatically transmitting the created data packet to a telephone number connected with the air conditioner selected at the step b) over the telephone network.

In a feature of the present invention, in order to control at least one air conditioner installed in a building or home from a remote site, information about settings of the air conditioner is registered so that a control command can be automatically transmitted to the air conditioner without performing a separate manual setting operation.

A graphic image-based registration window is provided on a screen to enable a remote user to readily register and confirm the setting information of the air conditioner. A display window is also provided on the screen to display information regarding an installed place of the air conditioner, a telephone number connected with the air conditioner, a unique ID of the air conditioner and note information, contained in the setting information of the air conditioner. Therefore, the remote user can input the control command for the air conditioner with reference to the setting information of the air conditioner.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a view schematically showing the construction of a conventional air conditioner control system using a telephone network;
Fig. 2 is a view schematically showing the construction of an air conditioner control system using a telephone network in accordance with the present invention;
Fig. 3 is a block diagram of a remote electronic device in the air conditioner control system using the telephone network in accordance with the present invention;
Fig. 4 is a view showing a preferred embodiment of a control program used in the air conditioner control system using the telephone network in accordance with the present invention; and
Fig. 5 is a flow chart illustrating the operation of the air conditioner control system using the telephone network in accordance with the present invention.

### DESCRIPTION OF THE PREFERRED EMBODIMENTS

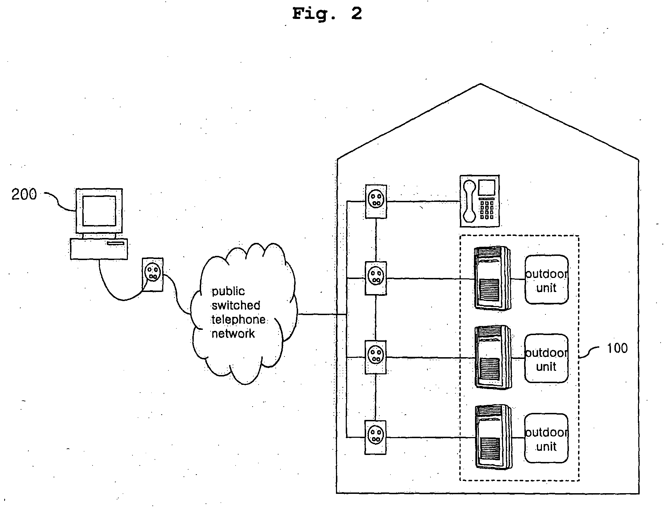

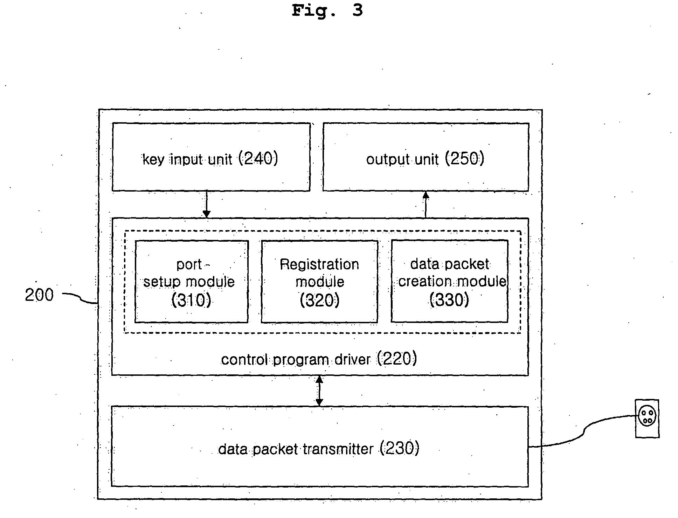

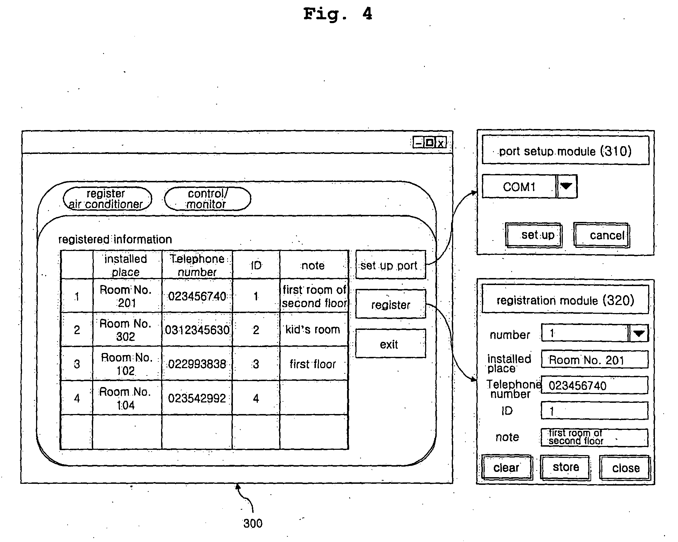

Fig. 2 is a view schematically showing the construction of an air conditioner control system using a telephone network in accordance with the present invention, Fig. 3 is a block diagram of a remote electronic device in the air conditioner control system using the telephone network in accordance with the present invention, and Fig. 4 is a view showing a preferred embodiment of a control program used in the air conditioner control system using the telephone network in accordance with the present invention.

A plurality of air conditioners 100 are installed in a home or building to condition indoor air. Each of the air conditioners 100 is physically connected to a telephone terminal in a place where it is installed, so it is in turn connected to an internal telephone network of the home or building. The internal telephone network is connected to a public switched telephone network TN via an exchange. As a result, a remote user can input control commands to the plurality of air conditioners 100 by making a call to a telephone number given to the internal telephone network.

Preferably, the remote user inputs control commands to the air conditioners 100 by operating a remote electronic device 200 at a remote site, and the air conditioners 100 are assigned different unique identifications (IDs), respectively. Accordingly, even though the air conditioners 100 are connected to the same telephone number, the remote user can designate a desired one of the unique IDs and transfer a control command to one of the air conditioners 100 corresponding to the designated unique ID.

The public switched telephone network TN is a telephone network that provides typical subscriber telephone services, such as voice and data switching services, to many subscribers via an exchange. In the public switched telephone network TN, a local switch performs switching to a telephone number dialed by a calling party several times to access the dialed telephone number. After accessing the dialed telephone number, the local switch establishes a call connection between the calling party and a called party corresponding to the dialed telephone number.

The remote electronic device 200 preferably includes a control program driver 220 for driving a control program 300 that enables the remote user to monitor information about the states of the plurality of air conditioners 100 and input control commands to the air conditioners 100, and a data packet transmitter 230 for transmitting a control command data packet created by the control program 300 to a corresponding one of the air conditioners 100 over the public switched telephone network TN. The remote electronic device 200 further includes a wired or wireless modem (not shown) connected to the telephone network TN, a key input unit 240 for inputting control commands according to the control program 300, and an output unit 250 for externally outputting information about the controlled results and states of the air conditioners 100 based on the control commands inputted through the key input unit 240.

By operating the control program 300 driven by the control program driver 220, the remote user can transfer a control command to a specific one of the air conditioners 100 to be controlled, and monitor information about a controlled state of the specific air conditioner based on the control command. The control program 300 may be downloaded from the Internet through a Web browser run in the remote electronic device 200, and designed with a graphic user interface (GUI), thereby providing the remote user with the convenience of remote control.

Accordingly, by operating the control program 300, the remote user selects a unique ID assigned to the specific air conditioner to be controlled and then inputs a control command to the specific air conditioner. Alternatively, the remote user may select and control all the plurality of air conditioners 100. It is also possible to release the control of all the selected air conditioners.

In order to access a given telephone number and control the plurality of air conditioners 100 connected to the telephone network, the remote user has to input information about settings of the air conditioners 100 to the remote electronic device 200 to register the setting information in a database thereof. At the same time that the remote user inputs control commands for some or all of the air conditioners 100, the control program 300 enables the remote electronic device 200 to rapidly perform data communication with the corresponding air conditioners on the basis of the registered setting information.

As shown in Figs. 3 and 4, the control program 300 includes a port setup module 310 for setting up a port (for example, any one of ports COM1 to COM4) for transmission and reception of signals to/from the plurality of air conditioners 100 connected to the telephone network, and a registration module 320 for registering the setting information of the air conditioners 100. The registration module 320 is adapted to register the setting information separately by the air conditioners 100. The setting information of each of the air conditioners 100 preferably includes a telephone number connected with a corresponding one of the air conditioners 100, a unique ID of the corresponding air conditioner, information regarding a place where the corresponding air conditioner is installed, and note information. The control program 300 further includes a data packet creation module 330 for creating a control command data packet based on a control command inputted by the remote user.

If the information about the settings of each of the air conditioners 100 is registered, then it is stored in the database of the remote electronic device 200. If a control command is inputted through the control program 300 by the remote user, then it is combined with the setting information of a corresponding air conditioner stored in the database to create a control command data packet, and the remote electronic device 200 automatically transmits and receives signals to/from the corresponding air conditioner over a telephone line. It is also possible to modify or delete the setting information as needed.

The remote electronic device 200 has a COM port settable up on a basic input output system (BIOS). Only when this COM port is the same as the port set up by the port setup module 310, the created control command data packet can be transmitted to the telephone network through the set-up port.

The data packet transmitter 230 in the remote electronic device 200 is adapted to receive the control command data packet created by the data packet creation module 330 and automatically transmit the received data packet to a telephone number connected with the corresponding air conditioner over the telephone network.

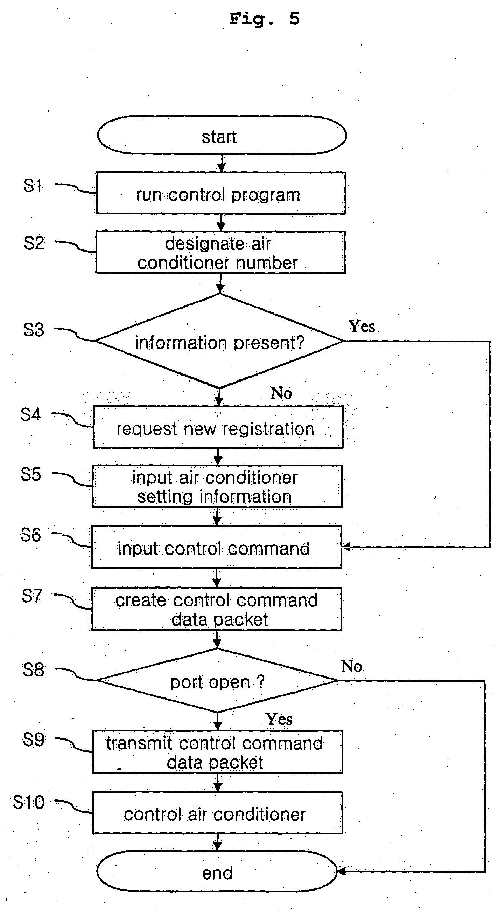

Next, a description will be given of the operation of the telephone network-based air conditioner control system with the above-stated construction in accordance with the present invention with reference to Fig. 5.

First, if the air conditioner control program is run in the remote electronic device (S1), then it accesses the database with the setting information of the air conditioners to load the setting information.

If the setting information is loaded, then the remote user selects a specific one of the air conditioners to be controlled by designating a number or ID of the specific air conditioner among the setting information through the control program (S2). In the case where there is no setting information of the specific air conditioner in the database, or the database is not accessible (S3), it is not possible for the control program to combine the setting information of the specific air conditioner with a control command to be inputted by the remote user to create a control command data packet. In this case, therefore, the control program requests the remote user to newly register the setting information of the specific air conditioner (S4). However, in the case where there is the setting information of the specific air conditioner in the database, the remote user inputs a control command directly.

If the new registration is requested, then the remote user newly registers the setting information of the specific air conditioner by inputting information regarding an installed place of the specific air conditioner, a telephone number connected with the specific air conditioner, a unique ID of the specific air conditioner and note information and setting up a communication port for connection with the specific air conditioner (S5).

After selecting the specific air conditioner, the remote user inputs a control command for an operation mode, wind direction, air volume or etc. (S6) and then clicks an execution button. If the control program confirms the ID of the specific air conditioner and the telephone number connected therewith, included in the setting information of the specific air conditioner, and the set-up communication port, then it creates one control command data packet containing the inputted control command (S7).

A determination is made as to whether the set-up communication port is in its open state (S8). In the case where the set-up communication port is determined to be in its closed state, the control process is ended because it is impossible to conduct data communication. However, in the case where the set-up communication port is determined to be in its open state, the created control command data packet is transmitted from the remote electronic device to the telephone number connected with the specific air conditioner over the telephone network (S9). Upon receiving the transmitted control command data packet, the specific air conditioner reads the control command contained in the received data packet and performs a control operation associated therewith (S10).

After performing the control operation, the specific air conditioner creates data regarding its controlled state and feeds the created data back to the remote electronic device so that the remote user can monitor the controlled state of the specific air conditioner through the control program run in the remote electronic device.

As apparent from the above description, the present invention provides an air conditioner control system using a telephone network and a method for operating the same, wherein information about settings of a plurality of air conditioners is registered and stored in a database and, if control commands for the air conditioners are inputted through a control program that is downloaded through a Web browser and implemented with a GUI, then control command data is automatically transmitted to the air conditioners on the basis of the setting information stored in the database, resulting in improvements in the convenience of remote control and automation. Further, a remote user can input more accurate control commands for the air conditioners because he/she can recognize details of the air conditioners.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An air conditioner control system using a telephone network, comprising:
a plurality of air conditioners for transmitting and receiving signals over said telephone network; and
remote electronic means for driving a control program to receive information about settings of said plurality of air conditioners, register the received setting information and input control commands to some or all of said air conditioners on the basis of the registered setting information.

2. The air conditioner control system as set forth in claim 1, wherein said air conditioners are assigned different unique identifications (IDs), respectively, so that they are distinguishable from one another.

3. The air conditioner control system as set forth in claim 1, wherein said control program includes:
a port setup module for setting up a port to be connected to said telephone network to communicate with said air conditioners over said telephone network; and
a registration module for registering said setting information of said air conditioners, said setting information of each of said air conditioners including a telephone number connected with a corresponding one of said air conditioners and a unique ID assigned to the corresponding air conditioner.

4. The air conditioner control system as set forth in claim 3, wherein said setting information of each of said air conditioners further includes information regarding a place where said corresponding air conditioner is installed, and note information.

5. The air conditioner control system as set forth in claim 3, wherein said control program further includes a data packet creation module for creating a control command data packet based on a control command inputted by a user.

6. The air conditioner control system as set forth in claim 5, wherein said remote electronic means includes a data packet transmitter for automatically transmitting said control command data packet created by said data packet creation module to a telephone number connected with a corresponding one of said air conditioners over said telephone network.

7. The air conditioner control system as set forth in claim 1, wherein said control program includes a data packet creation module for creating a control command data packet based on a control command inputted by a user.

8. A method for operating an air conditioner control system using a telephone network, comprising the steps of:
a) running an air conditioner control program in a remote electronic device to register information about settings of a plurality of air conditioners;
b) selecting one of said air conditioners to be controlled and inputting a control command for the selected air conditioner; and
c) creating a control command data packet on the basis of said setting information registered at said step a) and automatically transmitting the created data packet to a telephone number connected with said air conditioner selected at said step b) over said telephone network.

9. The method as set forth in claim 8, wherein said step b) includes the step of, if information about settings of the selected air conditioner has not been registered, displaying a new registration request message on a screen and returning to said step a).

10. The method as set forth in claim 8, wherein said step c) includes the step of determining whether a port for transmission of said control command data packet created by said control program over said telephone network is in its open state.
